# EUROPÄISCHE PATENTSCHRIFT

(11) **EP 0 457 092 B1**
(45) Veröffentlichungstag und Bekanntmachung des Hinweises auf die Patenterteilung: **11.09.1996**
(21) Anmeldenummer: 91106965.6
(22) Anmeldetag: 30.04.1991
(51) Int. Cl.: C08B 11/193, C08B 11/08, C08B 11/187, D21H 19/34

(54) **Alkenylmethylhydroxypropylcelluloseether und ein Verfahren zu ihrer Herstellung**
Alkenylmethylhydroxypropyl cellulose ethers and process for their preparation
Ether de alkénylméthylhydroxypropyl cellulose et procédé de préparation

(30) Priorität: 11.05.1990 DE 4015158
(43) Veröffentlichungstag der Anmeldung: 21.11.1991
(73) Patentinhaber: Wolff Walsrode Aktiengesellschaft, D-29655 Walsrode (DE)
(72) Erfinder: Breckwoldt, Jörn, Dr., W-2720 Rotenburg/W. (DE)
(74) Vertreter: Braun, Rolf, Dr.

(56) Entgegenhaltungen:
- DE-A- 1 418 921

## Beschreibung

Die Erfindung betrifft polymerisierbare und in organischen Lösemitteln lösliche Alkenylmethylhydroxypropylcelluloseether.

Für verarbeitungs- und anwendungstechnische Zwecke sind Celluloseether von Vorteil, die in organischen Lösemitteln löslich und polymerisierbar sind.

In der Patentliteratur sind die Allylcellulose (AC), Allylhydroxyethylcellulose (AHEC), Methallylcellulose (MAC) und die Crotonylcellulose beschrieben. Als organische Lösemittel werden meist Ketone, Ester und aromatische Kohlenstoffe aufgeführt (verwiesen wird auf US-PS 2 232 927, US-PS 2 406 369, DE-PS 1 065 828, DE-A 1 418 271, US-PS 2 082 797 und US-PS 2 398 767).

Die Produkte weisen alle einen hohen Substitutionsgrad bezüglich der ungesättigten Gruppe auf. Deshalb verlieren die Celluloseether schon nach kurzer Zeit in organischen Lösemitteln, aber auch in Substanz, ihre Löslichkeit. Die Polymerisation wurde durch Licht, Hitze und Sauerstoff eingeleitet. Ein wesentlicher Nachteil an allen Verfahren ist die geringe Chemikalienausbeute, bezogen auf das ungesättigte Halogenid. Sie liegt zwischen 10 und 20 %.

Aus der DE-.A-14 18 921 sind wasserlösliche Celluloseallylmischether bekannt, die jedoch aufgrund der Tatsache, daß sie nur in Wasser löslich sind, nur sehr beschränkt einsetzbar sind.

Der Erfindung lag die Aufgabe zugrunde, organolösliche, polymerisierbare Celluloseether hoher Lagerstabilität bereitzustellen.

Eine weitere Aufgabe bestand in der Bereitstellung eines Herstellungsverfahrens mit hoher Chemikalienausbeute.

Gegenstand der Erfindung sind polymerisierbare und in organischen Lösemitteln lösliche Methylhydroxypropylcelluloseether, dadurch gekennzeichnet, daß der durchschnittliche Substitutionsgrad DS mit Methylgruppen 1,5 bis 2,9 und der molare Substitutionsgrad MS mit Hydroxypropylgruppen 1,4 bis 1,9 beträgt und daß zusätzlich polymerisierbare Alkenylgruppen mit einem durchschnittlichen Substitutionsgrad DS der Alkylengruppen von 0,05 bis 1 enthalten sind.

In einer bevorzugten Ausführungsform lösen sich wenigstens 2 g/100 g Lösemittel der Cellluloseether bei 25°C in polar organischen Lösemitteln unter Bildung einer klaren Lösung. Als polar organische Lösemittel werden solche verstanden, die polare Gruppen, in denen die Heteroatome Stickstoff, Schwefel und Sauerstoff bevorzugt enthalten sind, in dem Molekül tragen.

Bevorzugte polare Gruppen sind: 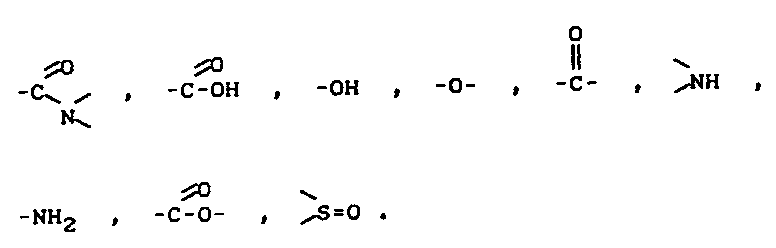 Ein typisches polares organisches Lösungsmittel ist Ethanol.

Es liegt in der Natur von Polymeren, daß die Herstellung einer "gesättigten" Lösung des Celluloseethers nicht möglich ist, da mit steigender Konzentration für jeden Viskositätstyp ein Ansteigen der Lösungsviskosität einhergeht, die ihre Grenze in der technischen Verarbeitbarkeit findet.

Gegenstand der Erfindung ist weiterhin ein Verfahren zur Herstellung der erfindungsgemäßen Alkenylmethylhydroxypropylcelluloseether durch
a) Bildung einer Alkalicellulose durch Umsetzung von Cellulose mit Alkali
b) Umsetzung der Alkalicellulose mit einer Hydroxypropylgruppen übertragenen Verbindung und einem ungesättigten Alkylierungsmittel RX und anschließende
c) Methoxylierung nach Abschluß der Hydroxypropylierung durch Zugabe eines Methylierungsmittels.

Als ungesättigtes Alkylierungsmittel wird vorzugsweise eine Verbindung der Formel

RX

verwendet, wobei bedeuten:
- X =: anionbildender Rest, bevorzugt Cl, Br, OSO₃R
- R =: Alkenylrest, insbesondere

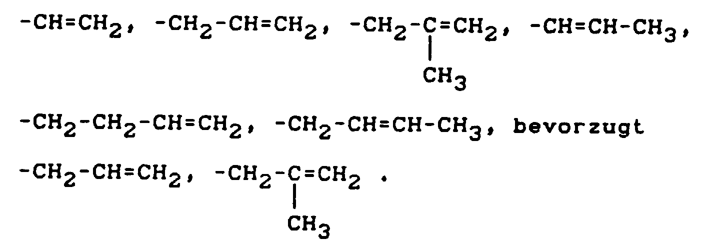

Als Ausgangsmaterial für das erfindungsgemäße Verfahren werden gemahlene Cellulosen, wie Bleichlinters oder Holzzellstoff, verwendet. Die Viskositätsstufen der Produkte lassen sich durch die Auswahl der Cellulosen, die einen entsprechenden Durchschnittspolymerisationsgrad aufweisen, einstellen. Niedrigviskose Produkte können durch Verwendung von nach üblichen Verfahren oxidativ abgebauten Zellstoffen hergestellt werden.

Die Alkalisierung der Cellulose und ihre nachfolgende Veretherung kann in Anwesenheit von organischen Lösemitteln bei einem Gewichtsverhältnis des Lösungsmittels zur Cellulose, vorzugsweise 2,5 : 1, durchgeführt werden, um lokale Überhitzungen zu vermeiden und zu gleichmäßig veretherten Produkten zu gelangen. Geeignete organische Lösemittel sind niedere Alkohole, die vorzugsweise 2 bis 4 Kohlenstoffatome pro Molekül enthalten, sowie Ether mit vorzugsweise 2 bis 4 Kohlenstoffatomen pro Molekül oder Mischungen dieser Lösungsmittel.

Die Cellulose wird zur Alkalisierung mit der Natronlauge besprüht, wobei ihre Konzentration 20 bis 50 Gew.-%, vorzugsweise 40 bis 50 Gew.-%, betragen soll und die eingesetzte Menge nicht kleiner als 1,6 Mol Natriumhydroxid pro Mol Cellulose ist. Erfindungsgemäß erfolgt die Zugabe des Hydroxyalkylierungsmittels und des Alkylierungsmittels RX entweder vor der Natriumhydroxydzugabe oder nach der Alkalisierungsphase. Zur Veretherung wird das Reaktionsgemisch bis auf Temperaturen von 50 bis 100°C, vorzugsweise 70 bis 90°C, aufgeheizt und das eingestellte Temperaturniveau bis zur vollständigen Umsetzung beibehalten. Vor der Zugabe des Methylierungsmittels wird das Reaktionsgemisch gekühlt, vorzugsweise auf Temperaturen unter 50°C, und gegebenenfalls wird weiteres Natriumhydroxid zugesetzt. Nun wird erneut auf Temperaturen von 50 bis 100°C, vorzugsweise 70 bis 90°C, aufgeheizt und bei dieser Temperatur innerhalb von 1 bis 5 Stunden, vorzugsweise 1,5 bis 3 Stunden, die Veretherungsreaktion durchgeführt. Hierbei stellt sich bei Anwendung eines Überschusses von Methylchlorid von bevorzugt 6 bis 12 Mol pro Mol Cellulose ein maximaler Druck von 18 bis 20 bar ein, weshalb die Umsetzung in Druckreaktoren durchgeführt wird.

Die Reinigung der so erhaltenen Rohprodukte kann bei den nichtionischen Derivaten durch eine Heißwasserwäsche erfolgen, da sie einen thermischen Flockpunkt aufweisen.

Die Unlöslichkeit in heißem Wasser erlaubt eine Reinigung mit Wasser auf einen niedrigen Aschegehalt im Vergleich zur Reinigung mit wäßrig organischen Lösemitteln, welche nicht nur die Nachteile haben, daß sie weit teurer sind, sondern welche auch das Verfahren komplizieren, weil sie zurückgewonnen werden müssen. Darüber hinaus kann selbst mit großen Mengen organischer Lösemittel ein so niedriger Aschegehalt wie mit heißem Wasser nicht erreicht werden.

Eine Alkenylmethylhydroxypropylcellulose mit einem Methoxyl DS von 1,5 bis 2,9, einem Hydroxypropyl MS von 1,4 bis 1,9 und einem Alkenyl DS von 0,05 bis 1, besonders bevorzugt mit einem Methoxyl DS von 2,5 bis 2,6, einem Hydroxypropyl MS von 1,5 bis 1,7 und einem Alkenyl DS von 0,1 bis 0,3, wobei der Alkenylrest bevorzugt den Allyl- bzw. Methallylsubstituenten darstellt, zeichnet sich überraschend durch folgende Eigenschaften aus:
1. Löslichkeit in kalten Wasser (Temperatur <4°C),
2. Unlöslichkeit in heißem Wasser,
3. Löslichkeit in einer Vielzahl von polar organischen Lösemitteln,
4. Polymerisierbarkeit,
5. Lagerstabilität.

Bei den erfindungsgemäßen Celluloseethern haben die Bezeichnungen DS (Degree of Substitution) und MS (Substitutionsgrad) die übliche Bedeutung:

In jeder Anhydroglucoseeinheit in dem Cellulosemolekül sind drei Hydroxylgruppen vorhanden.
- DS: ist die Durchschnittsanzahl der in der Cellulose substituierten Hydroxylgruppen pro Anhydroglucoseeinheit,
- MS: ist die Durchschnittsanzahl der Mole des mit der Cellulose kombinierten Reaktionspartners pro Anhydroglucoseeinheit.

Bevorzugte Mittel zur Übertragung der Hydroxypropylgruppe sind insbesondere Propylenoxid, aber auch Propylenchlorhydrin.

Besonders bevorzugte Methylierungsmittel sind Methylchlorid aber auch Dimethylsulfat, Methylbromid, Methyliodid, Methansulfonsäure-methylester, Benzyl-4-sulfonsäure-methylester, Toluol-4-sulfonsäure-methylester, Trifluormethansulfonsäure-methylester.

Die erfindungsgemäß hergestellten Celluloseether sind in einer Vielzahl von organischen Lösemitteln löslich. Bevorzugt sind aliphatische und cycloaliphatische Alkohole, wie Methanol, Ethanol, Isopropanol (Wasseranteil 20 %), tertiär Butanol (Wasseranteil 10 %); aliphatische, cycloaliphatische Ether, wie 1,4-Dioxan, Tetrahydrofuran; Carbonsäuren, wie Essigsäure; chlorierte Kohlenwasserstoffe, wie Chloroform, Methylenchlorid; Amine, wie Pyridin; Amide, wie Dimethylformamid; schwefelhaltige, organische Lösemittel, wie Dimethylsulfoxid und aromatische Kohlenwasserstoffe in Verbindung mit aliphatischen Alkoholen, wie Toluol/Ethanol (80/20).

Die erfindungsgemäß hergestellten Celluloseether zeigen eine gute Filmbildung. Die Filme sind durchsichtig, sehr flexibel und lösen sich weder in Ölen und Fetten noch in Benzin. Von wäßrigen Systemen (Säuren, Laugen) und einer Vielzahl von organischen Lösemitteln werden die Folien aufgelöst (siehe Löseverhalten der Celluloseether). Filme der Alkenylmethylhydroxypropylcellulose können unlöslich werden, indem man die vorhandene Doppelbindung zur Vernetzung bringt. Dieses kann durch UV-Licht initiiert werden. Dabei verfärben sich die Filme nicht. Eine thermische Initiierung ist nicht möglich.

Die Löslichkeit der erfindungsgemäßen Celluloseether in organischen Lösemitteln, insbesondere in niederen Alkoholen, ist zur Verdickung von kosmetischen Artikeln, Lotionen, Parfüms etc.; in Abbeizpasten sowie einigen Druckfarben ausnutzbar.

In den erfindungsgemäß hergestellten Alkenylmethylhydroxypropylcellulosen sind Doppelbindungen in die Cellulosekette eingeführt worden, die man in nachfolgenden Reaktionen als aktive Zentren ausnutzen kann. Die Doppelbindungen können zu Additionsreaktionen, und zwar sowohl zu Ionen- als auch zu Radikalreaktionen angewandt werden.

Aufgrund der Homo- bzw. Copolymerisationsfähigkeit mit ungesättigten Verbindungen können mit Hilfe der Alkenylmethylhydroxypropylcellulosen Lackrohstoffe, Coatings und wasserabsorbierende Materialien hergestellt werden.

Für Coatings von Papieren und anderen Substraten ist die Alkenylmethylhydroxypropylcellulose besonders geeignet, da diese durch UV-Licht, ohne die Transparenz nachteilig zu verändern, homopolymerisierbar ist. Mit Vinylmonomeren, insbesondere Acrylaten und/oder Methacrylaten, können durch eine Copolymerisation die Eigenschaften der Überzüge variiert werden.

Schwer entflammbare Coatings für Papiere und Textilien können durch
1. eine Copolymerisation mit Alkenylphosphorverbindungen
2. eine Addition von Si-H und P-H-Verbindungen
an die Doppelbindung erzielt werden. Für Dekorationen und Theaterkulissen besitzen diese ein großes Interesse.

### Beispiel 1 - Methylhydroxypropylmethallylcellulose (MHPMAC)

In einem mit Inertgas gespülten 2-1-Druckautoklaven werden 121,5 g feingemahlener Holzzellstoff mit 120 g 50 %iger Natronlauge 60 min bei Raumtemperatur alkalisiert. Dann werden 152 g Propylenoxid und 47 g Methallylchlorid zur Alkalicellulose gegeben. Die Temperatur im Autoklaven wird auf 90°C erhöht. Nach einer Veretherungszeit von 3 Stunden wird der Reaktor abgekühlt und mit 12 Mol Methylchlorid pro Mol Cellulose und 180 g Natronlauge (Prills) versetzt. Es wird auf 80°C erwärmt und 4 Stunden methoxyliert. Nach dem Abkühlen wird die MHPMAC mit heißem Wasser gereinigt und getrocknet. Die entstandene MHPMAC weist folgende Substitutionsgrade auf:
- DS (OMe):: 2,47
- DS (OMa):: 0,25
- MS (HP):: 1,65

Die Chemikalienausbeute bezogen auf Methallylchlorid beträgt 36 %.

### Löslichkeit

Die erfindungsgemäßen Celluloseether sind in einer Vielzahl von organischen Lösemitteln löslich. Zur Bestimmung der Löslichkeit wurden in einem Probenröhrchen 0,6 g des Celluloseethers bis zu einem Gesamtgewicht von 30 g mit dem zu untersuchenden Lösemittel versetzt. Nach einer Verweilzeit von 24 Stunden auf einem Schüttelgerät wurde die Güte der Löslichkeit bestimmt. In Tabelle 1 wird die Überlegenheit der erfindungsgemäßen Celluloseether gegenüber anderen als organolöslich beschriebenen Methylhydroxypropylcellulosen deutlich.

**Tabelle 1:**

| Löslichkeiten in EtOH | | | |
|---|---|---|---|
| Celluloseether | DS | MS | Löslichkeit in Ethanol |
| MHPMAC (erfindungsgemäß) | 2,47/0,25 | 1,65 | löslich |
| MHPC (Anspruch US-PS 4,614,545) | 1,6 | 0,4 | unlöslich |
| MHPC (Anspruch US-PS 4,614,545 entspr. Beispiel) | 2,12 | 0,82 | stark angequollen |

Die neuen Celluloseether zeigen eine gute Filmbildung. Zur Herstellung von Filmen wurde eine 10 %ige Lösung des Celluloseethers in Ethanol hergestellt. Mit einem Handgießer wurden dann Filme auf Glasplatten ausgezogen und diese 1 Stunde bei 50°C im Umlufttrockenschrank getrocknet und von der Glasplatte abgezogen. Die Filme sind klar, flexibel und lösen sich weder in Öl noch Benzin. Werden die Filme einer Alkenylmethylhydroxypropylcellulose einer UV-Bestrahlung ausgesetzt, so vernetzen die ungesättigten Gruppen mittels einer Homopolymerisation. Die Filme werden dann in organischen Lösemitteln unlöslich. Die ungesättigten Gruppen sind auch für eine Copolymerisation, insbesondere mit Acrylaten und/oder Methacrylaten, zugänglich.

Die mechanischen Festigkeiten der Filme wurden nach DIN 53 455 bestimmt. Die Zugprüfversuche wurden mit einer Franck-Universal-Prüfmaschine 81565.553, der Fa. Karl Franck GmbH, Weinheim/Birkenau, durchgeführt. Die Vorteile, speziell der erfindungsgemäßen MHPMAC, gehen aus der Tabelle 2 hervor.

**Tabelle 2**

| Mechanische Festigkeiten wasserlöslicher Celluloseether-Folien | | | | | |
|---|---|---|---|---|---|
| Celluloseether | DS | MS | Reißfestigkeit [N/mm²] | Reißdehnung [%] | E-Modul [N/mm² ] |
| CMC | 0,9 | | 37,3 | 10,9 | 35,1 |
| MHEC | 1,4 | 0,2 | 35,3 | 26,3 | 34,6 |
| HEC* | | 2,5 | 28 | 15-40 | |
| HPC* | | 4 | 14 | 56 | |
| MHPMAC (erfindungsgemäß | 2,47/0,25 | 1,65 | 17,2 | 38,4 | 35,9 |

| | | | | | |
|---|---|---|---|---|---|
| * entnommen aus: E.D. Klug, J. Polymer Sci., Part C, 36 (1977), 491 | | | | | |

## Patentansprüche

1. Polymerisierbare Methylhydroxypropylcelluloseether, dadurch gekennzeichnet, daß der durchschnittliche Substitutionsgrad DS mit Methylgruppen 1,5 bis 2,9 und der molare Substitutionsgrad MS mit Hydroxypropylgruppen 1,4 bis 1,9 beträgt und daß zusätzlich polymerisierbare Alkenylgruppen mit einem durchschnittlichen Substitutionsgrad DS der Alkylengruppen von 0,05 bis 1 enthalten sind.

2. Celluloseether gemäß Anspruch 1, dadurch gekennzeichnet, daß der durchschnittliche Substitutionsgrad DS-Methyl 2,5 bis 2,6 beträgt.

3. Celluloseether nach wenigstens einem der vorhergehenden Ansprüche, dadurch gekennzeichnet, daß der molare Substitutionsgrad MS (Hydroxypropyl) 1,5 bis 1,7 beträgt.

4. Vefahren zur Herstellung eines hochsubstituierten Alkenylmethylhydroxypropylcelluloseethers, nach wenigstens einem der Ansprüche 1 bis 3, dadurch gekennzeichnet, daß das Verfahren in folgenden Schritten durchgeführt wird:
a) Bildung einer Alkalicellulose durch Umsetzung von Cellulose mit Alkali
b) Umsetzung der Alkalicellulose mit einer Hydroxypropylgruppen übertragenen Verbindung und einem ungesättigten Alkylierungsmittel RX und anschließende
c) Methoxylierung nach Abschluß der Hydroxypropylierung durch Zugabe eines Methylierungsmittels.

5. Verfahren nach Anspruch 4, dadurch gekennzeichnet, daß wenigstens ein Reaktionsschritt in Gegenwart eines organischen Lösungsmittels durchgeführt wird.

6. Verfahren nach wenigstens einem der vorhergehenden Ansprüche 4 oder 5, dadurch gekennzeichnet, daß
1. die Alkalisierung mit wenigstens 1,6 Mol wäßriger NaOH pro Mol wiederkehrender Anhydroglykoseeinheiten durchgeführt wird,
2. die Propoxylierung bei 50 bis 100°C durchgeführt wird,
3. nach Abschluß der Propoxylierung das Methylierungsmittel zugegeben wird und daß
4. gegebenenfalls zwischen Propoxylierung und Methylierung gegebenenfalls weiteres Alkali nach zwischenzeitlicher Abkühlung zugegeben wird.

7. Verfahren nach wenigstens einem der vorhergehenden Ansprüche 4 bis 6, dadurch gekennzeichnet, daß zur Hydroxypropylierung Propylenoxid und zur Methylierung Methylchlorid verwendet wird.

8. Verwendung eines Celluloseethers gemäß wenigstens einem der vorhergehenden Ansprüche 1 bis 3 zur Herstellung von Folien und Beschichtungen.

## Claims

1. Polymerisable methylhydroxypropylcellulose ethers, characterised in that the average degree of substitution DS with methyl groups is 1.5 to 2.9 and the molar degree of substitution MS with hydroxypropyl groups is 1.4 to 1.9 and in that polymerisable alkenyl groups with an average degree of substitution DS of the alkylene groups of 0.05 to 1 are additionally present.

2. Cellulose ethers according to claim 1, characterised in that the average degree of substitution DS methyl is 2.5 to 2.6.

3. Cellulose ethers according to at least one of the preceding claims, characterised in that the molar degree of substitution MS (hydroxypropyl) is 1.5 to 1.7.

4. Process for the production of a highly substituted alkenylmethylhydroxypropylcellulose ether according to at least one of claims 1 to 3, characterised in that the process is performed in the following stages:
a) formation of an alkali cellulose by reaction of cellulose with alkali
b) reaction of alkali cellulose with a compound which transfers hydroxypropyl groups and an unsaturated alkylating agent RX and subsequent
c) methoxylation on completion of the hydroxypropylation by addition of a methylating agent.

5. Process according to claim 4, characterised in that at least one reaction stage is performed in the presence of an organic solvent.

6. Process according to at least one of the preceding claims 4 or 5, characterised in that
1. alkalisation is performed with at least 1.6 mol of aqueous NaOH per mol of anhydroglucose repeat units,
2. propoxylation is performed at 50 to 100°C,
3. on completion of propoxylation, the methylating agent is added and that
4. optionally between propoxylation and methylation, further alkali is optionally added after intermediate cooling.

7. Process according to at least one of the preceding claims 4 to 6, characterised in that propylene oxide is used for hydroxypropylation and methylene chloride is used for methylation.

8. Use of a cellulose ether according to at least one of the preceding claims 1 to 3 for the production of films and coatings.

## Revendications

1. Ethers de méthylhydroxypropylcellulose polymérisables, caractérisés en ce que le degré moyen DS de substitution avec des groupes méthyle s'élève à une valeur de 1,5 à 2,9 et le degré molaire MS de substitution avec des groupes hydroxypropyle s'élève à une valeur de 1,4 à 1,9, et en ce qu'ils contiennent en outre des groupes alcényle polymérisables avec un degré moyen DS de substitution des groupes alkylène de 0,05 à 1.

2. Ethers de cellulose suivant la revendication 1, caractérisés en ce que le degré moyen DS de substitution avec des groupes méthyle s'élève à une valeur de 2,5 à 2,6.

3. Ethers de cellulose suivant l'une au moins des revendications précédentes, caractérisés en ce que le degré molaire MS de substitution (groupes hydroxypropyle) s'élève à une valeur de 1,5 à 1,7.

4. Procédé de production d'un éther d'alcénylméthylhydroxypropylcellulose hautement substitué suivant l'une au moins des revendications 1 à 3, caractérisé en ce qu'il est mis en oeuvre en passant par les étapes suivantes :
a) formation d'une cellulose alcaline par réaction de cellulose avec un alcali
b) réaction de la cellulose alcaline avec un composé transférant des groupes hydroxypropyle et un agent d'alkylation RX non saturé puis
c) méthoxylation par addition d'un agent de méthylation après la fin de l'hydroxypropylation.

5. Procédé suivant la revendication 4, caractérisé en ce qu'au moins une étape de réaction est conduite en présence d'un solvant organique.

6. Procédé suivant l'une au moins des revendications 4 ou 5 précédentes, caractérisé en ce que
1. l'alcalinisation est effectuée avec au moins 1,6 mole de NaOH aqueux par mole de motifs anhydroglucose récurrents,
2. la propoxylation est conduite à une température de 50 à 100°C,
3. l'agent de méthylation est ajouté lorsque la propoxylation est terminée, et en ce que
4. on ajoute, le cas échéant entre la propoxylation et la méthylation, éventuellement un supplément d'alcali après un refroidissement intermédiaire.

7. Procédé suivant l'une au moins des revendications 4 à 6 précédentes, caractérisé en ce qu'on utilise de l'oxyde de propylène pour l'hydroxypropylation et du chlorure de méthyle pour la méthylation.

8. Utilisation d'un éther de cellulose suivant l'une au moins des revendications 1 à 3 précédentes pour la production de feuilles et de revêtements.
